(19) Europäisches Patentamt
European Patent Office
Office européen des brevets

(11) **EP 3 640 443 B1**

(12) **EUROPÄISCHE PATENTSCHRIFT**

(45) Veröffentlichungstag und Bekanntmachung des Hinweises auf die Patenterteilung:
**14.02.2024  Patentblatt 2024/07**

(21) Anmeldenummer: **19202886.8**

(22) Anmeldetag: **14.10.2019**

(51) Internationale Patentklassifikation (IPC):
**F01N 3/021** (2006.01)  **F01N 11/00** (2006.01)
**F01N 9/00** (2006.01)  **F02D 41/14** (2006.01)

(52) Gemeinsame Patentklassifikation (CPC):
**F01N 3/021; F01N 9/002; F01N 9/005;**
**F01N 11/002; F01N 11/005; F02D 41/145;**
F01N 2550/04; F01N 2560/08; F01N 2900/0412;
F01N 2900/0416; F01N 2900/0601;
F01N 2900/1406; F01N 2900/1606; Y02T 10/12;
Y02T 10/40

(54) **VERFAHREN ZUR BESTIMMUNG DER BELADUNG EINES RUSSFILTERS**

METHOD FOR DETERMINING THE CONTAMINATION OF A RUST FILTER

PROCÉDÉ DE DÉTERMINATION DE LA CHARGE D'UN FILTRE À PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2018  DE 102018125730**

(43) Veröffentlichungstag der Anmeldung:
**22.04.2020  Patentblatt 2020/17**

(73) Patentinhaber:
• **Volkswagen AG**
  **38440 Wolfsburg (DE)**
• **Robert Bosch GmbH**
  **70442 Stuttgart (DE)**

(72) Erfinder:
• **Schwarzmann, Dieter**
  **70178 Stuttgart (DE)**

• **Binnewies, Thomas**
  **29336 Nienhagen (DE)**
• **Kessler, Thomas**
  **38542 Leiferde (DE)**
• **Brunner, Florian**
  **71106 Magstadt (DE)**

(74) Vertreter: **Gulde & Partner**
  **Patent- und Rechtsanwaltskanzlei mbB**
  **Wallstraße 58/59**
  **10179 Berlin (DE)**

(56) Entgegenhaltungen:
EP-A1- 1 854 971     FR-A1- 2 965 013
US-A1- 2005 016 137

**Beschreibung**

Die Erfindung betrifft ein Verfahren zur Bestimmung der Beladung eines Rußfilters mit Rußpartikeln aus einem Abgasmassenstrom eines Verbrennungsmotors in einem Kraftfahrzeug. Weiterhin betrifft die Erfindung eine Steuereinrichtung für einen Verbrennungsmotor und ein Computerprogrammprodukt zur Durchführung eines derartigen Verfahrens.

Im Zuge der Bemühungen zur Luftreinhaltung bestehen mittlerweile in allen Industriestaaten gesetzliche Vorgaben in Form von Grenz- oder Zielwerten, insbesondere auch Partikelgrenzwerten, für die Freisetzung von Schadstoffen. In Anbetracht eines weltweit zunehmenden Verkehrsaufkommens kommt daher einer Abgasnachbehandlung bei den vorwiegend mit Verbrennungsmotoren betriebenen Kraftfahrzeugen eine herausragende Bedeutung zu. Die beim Betrieb von Dieselmotoren und von modernen Ottomotoren mit Direkteinspritzung entstehenden Rußpartikel werden daher in Rußfiltern beziehungsweise Partikelfiltern zurückgehalten und gesammelt. Die verwendeten Rußfilter sind dazu mit porösen Innenwänden, etwa aus Keramik, ausgestattet, durch die der Abgasstrom geleitet wird, wobei sich die Rußpartikel an oder in den porösen Wänden ablagern. Durch die Ablagerung der Partikel an oder in den porösen Innenwänden erhöht sich somit der Strömungswiderstand des Filters und damit der durch den Abgasvolumenstrom erzeugte Differenzdruck über dem Rußfilter, was wiederum einen höheren Kraftstoffverbrauch bedingt. Um ein Verstopfen des Filters zu verhindern, wird die abgelagerte Rußpartikelschicht beim Erreichen einer vorgegebenen Beladungsgrenze des Rußfilters entfernt. Da Rußpartikel zum größten Teil aus brennbaren Bestandteilen bestehen, erfolgt dieser Regenerationsvorgang durch ein Verbrennen der Rußablagerungen bei etwa 600°C im Rußfilter unter Umwandlung zu Kohlenstoffdioxid.

Die Beladung des Rußfilters wird üblicherweise durch eine Messung des Differenzdrucks über dem Rußfilter bestimmt und von der Motorsteuerung überwacht, die beim Erreichen einer vorgegebenen Beladungsgrenze eine Regeneration des Rußfilters auslöst und, unter Berücksichtigung der zusätzlichen Abhängigkeit des Differenzdrucks von der Motorlast und Motordrehzahl, steuert. Wann ein Rußfilter in einem Kraftfahrzeug einer Regeneration bedarf richtet sich folglich nach der spezifischen Art und Weise des Fahrverhaltens. So vermindert sich die Beladung eines Rußfilters mit Rußpartikeln in einem Kraftfahrzeug wesentlich bei langen Autobahnfahrten, während sie sich im Stadtverkehr erhöht. Wird eine Regeneration des Rußfilters zu spät ausgelöst oder unterbleibt ganz, kann sich das Rußfilter zusetzen und es entsteht ein ungewollt hoher Abgasgegendruck, der einen unerwünscht hohen Mehrverbrauch bis zum Motorstopp zur Folge hat. Erfolgt ein Ausbrennen zu früh, wird das Rußpartikelfilter infolge zu hoher Temperatur beschädigt. Eine zuverlässige Erkennung der Beladung eines Rußfilters in einem Kraftfahrzeug ist somit ein wesentliches Sicherheitsmerkmal, das zudem zu einem niedrigeren Kraftstoffverbrauch beiträgt und damit insgesamt den Beitrag eines Partikelfilters zur Luftreinhaltung erhöht.

Aus dem Stand der Technik sind verschiedene Methoden zur Beladungserkennung bei Partikelfiltern in Kraftfahrzeugen bekannt, bei denen ein Differenzdruck über dem Filter gemessen wird.

Beispielhaft sei die Offenlegungsschrift DE 199 33 988 A1 genannt, in der eine Bestimmung einer Beladung $c$ eines Partikelfilters aus dem Differentialdruck $\Delta P$ zwischen dessen Ein- und Ausgang und einer das Partikelfilter durchströmenden Gasmenge $A$ als Funktion der dem Motor zugeführten Frischluftmenge $M_{air}$ und Kraftstoffmenge $M_c$ angegeben ist, gemäß der Formel:

$$\Delta P = c \cdot A + b = c \cdot \left( (M_{air} + M_c) \cdot \frac{T}{P} \cdot N \right) + b$$

mit $b$: Konstante, $T$: Temperatur der Abgase vor dem Filter, $P$: Druck der Abgase vor dem Filter, $N$: Motordrehzahl.

Hierbei wird die Beladung als Proportionalitätsfaktor in einer Gleichung betrachtet, wobei eine Abweichung des verwendeten Differenzdrucksensors ausgehend von wenigstens zwei getrennten Messpunkten berechnet wird. Die Bestimmung der Beladung kann dabei über eine größere Anzahl von Messpunkten etwa durch eine lineare Regression erfolgen. In bekannter Weise können mittels einer linearen Regression die Eigenschaften (Parameter) einer linearen Funktion (Anstieg, Offset) geschätzt werden.

Das angegebene Beladungsmodell ermöglicht demnach zwar eine Berücksichtigung von sensorbedingten Abweichungen, beziehungsweise eines Sensoroffsets. Allerdings wird hierbei von einer linearen Abhängigkeit von Druckdifferenz und Volumenstrom ausgegangen. Das bedeutet, dass für eine Beladungsbestimmung der Abgasvolumenstrom bekannt sein muss, beziehungsweise lediglich ein Zusammenhang zwischen Beladung und Abgasvolumenstrom berücksichtigt wird, und damit nicht von beliebigen Zusammenhängen, beziehungsweise Kennlinien, ausgegangen werden kann.

Weitere Beladungsmodelle basierend auf einer Differenzdruckmessung sind DE 10 2014 201 589 B3, EP 1 854 971 A1, EP 2 261 474 A1, FR 2 965 013 A1, US 2005/016137 A1, WO 92/06284 A1 und WO 2008/079299 A2 zu entnehmen.

So offenbart die EP 1 854 971 A1 ein Verfahren zur Abschätzung einer Rußbeladung eines Partikelfilters. Um den Zeitpunkt für eine Regeneration des Partikelfilters zu erkennen, ist die möglichst genaue Kenntnis seiner Rußbeladung notwendig. Die zunehmende Rußbeladung der Filterwand führt zu einem Anstieg des sich über dem Partikelfilter ausbildenden Differenzdrucks, welcher ferner eine Funktion des Abgasvolumenstroms sowie von Filtermaterialeigenschaften ist. Die Messung oder Abschätzung des Differenzdrucks und der Volumenstromrate bietet somit eine Möglichkeit, die Masse der ausgefilterten Rußpartikel abzuschätzen und auf dieser Basis einen Regenerationsvorgang einzuleiten.

Aus der FR 2 965 013 A1 ist ein Verfahren zur adaptiven Schätzung einer Rußbeladung eines Partikelfilters bekannt, der an seinen Anschlüssen einen Differenzdruck aufweist und in einer Abgasleitung eines Verbrennungsmotors in einem Kraftfahrzeug angeordnet ist. Dabei ist das Schätzverfahren von einem zugehörigen Steuergerät implementiert. Zur Durchführung des Verfahrens sind ein Differenzsensor, der zur Messung des Differenzdrucks geeignet ist, und ein Sensor zur Bestimmung eines Volumenstroms von Abgasen in der Abgasleitung vorgesehen.

Die US 2005/016137 A1 offenbart ein Verfahren sowie eine Steuereinrichtung zur Regeneration eines Partikelfilters in der Abgasanlage eines Verbrennungsmotors. Dabei ist vorgesehen, den Partikelfilter auf seine Regenerationstemperatur aufzuheizen, wenn die Menge der im Partikelfilter angesammelten Partikel ein vorgeschriebenes Niveau erreicht hat, um die Partikel zu verbrennen, wodurch der Filter regeneriert wird.

Mit der vorliegenden Erfindung soll ein Verfahren bereitgestellt werden, das geeignet ist, die Nachteile des Standes der Technik zu überwinden und das insbesondere unabhängig von der Art der jeweils für eine Charakterisierung des Beladungsverhaltens des Rußfilters verwendeten Messsignale eine zuverlässige Bestimmung des aktuellen Beladungsgrades eines Rußfilters mit Rußpartikeln aus einem Abgasmassenstrom eines Verbrennungsmotors in einem Kraftfahrzeug ermöglicht.

Die erfindungsgemäße Aufgabe wird gelöst durch die Gegenstände der unabhängigen Patentansprüche. Bevorzugte Weiterbildungen sind Gegenstand der Unteransprüche.

Ein erster Aspekt der vorliegenden Erfindung betrifft ein Verfahren zur Bestimmung einer Beladung eines Rußfilters mit Rußpartikeln aus einem Abgasmassenstrom eines Verbrennungsmotors, insbesondere eines Ottomotors, in einem Kraftfahrzeug, welches die im Folgenden beschriebenen Verfahrensschritte aufweist.

Dabei werden die Begriffe Verbrennungsmotor, Ottomotor, Abgasmassenstrom, Druckabfall über dem Rußfilter und Echtzeit-Parameterschätzung gemäß den folgenden Definitionen verwendet. Als Verbrennungsmotoren werden allgemein Brennkraftmaschinen bezeichnet, die durch Verbrennung eines Kraftstoff-Luftgemisches betrieben werden. In Kraftfahrzeugen sind dies in erster Linie die mit Benzin betriebenen Ottomotoren und die mit Dieselkraftstoff betriebenen Dieselmotoren. Für einen Abgasmassenstrom gilt der Zusammenhang $\dot{m} = \rho \cdot C \cdot A = \rho \cdot \dot{V}$ mit $\rho$: Dichte des Abgases, $C$: mittlere Strömungsgeschwindigkeit, $A$: Querschnittsfläche, $\dot{V}$: Volumenstrom. Mit Druckabfall über dem Rußfilter wird üblicherweise eine Differenz eines Gasdrucks zwischen Eingang und Ausgang des Rußfilters im Betrieb bezeichnet ($\Delta p = p_{ein} - p_{aus}$). Eine Echtzeit-Parameterschätzung, oder auch Online-Parameterschätzung, ist ein Verfahren zur Schätzung von Parametern eines Prozessmodells in Echtzeit, also während eines Prozessablaufs. Dabei wird das Modell des realen Prozesses während des Betriebs mit berechnet. Ausgehend von Abweichungen zwischen modellierten Messwerten und realen (gemessenen) Messwerten werden die Parameter des Prozessmodells so angepasst, dass gleiches Ausgangsverhalten entsteht. Da die in die Echtzeit-Parameterschätzung eingehenden Messwerte in zeitlicher Abfolge anfallen, handelt es sich bei der Echtzeit-Parameterschätzung um ein zeitrekursives Verfahren (vgl. M. Vogt: Weiterentwicklung von Verfahren zur Online-Parameterschätzung und Untersuchung von Methoden zur Erzeugung zeitlicher Ableitungen, TU Darmstadt, 1998). Im Einzelnen handelt es sich bei der Echtzeit-Parameterschätzung um die Erstellung eines Modells, das durch ein Gleichungssystem mit einer Anzahl von zu bestimmenden Parametern beschrieben wird. Mit dem Gleichungssystem werden die Modellparameter ausgehend von einem gemessenen Eingangs-Ausgangsverhalten des realen Systems bestimmt. Zu den bekanntesten Parameterschätzverfahren zählen das Gradientenverfahren und die Methode der kleinsten Quadrate (vgl. H. Diesing, W. Tischer: Anwendung von Parameterschätzverfahren zur Identifikation mechanischer Schwingungssysteme, Berlin).

In einem ersten Verfahrensschritt wird eine Kennlinie für den Zusammenhang zwischen Abgasmassenstrom und Druckabfall über dem Rußfilter ohne Beladung ermittelt. Dazu wird eine Vielzahl von unterschiedlichen ersten Abgasmassenströmen eines Verbrennungsmotors durch ein Rußfilter ohne Beladung, also ein leeres Rußfilter, geleitet. Vorzugsweise wird der erste Abgasmassestrom dazu stufenweise so erhöht, dass der gesamte Strömungsbereich, innerhalb dessen der Abgasmassenstrom durch ein entsprechendes Rußfilter im realen Fahrbetrieb schwanken kann, bei der Charakterisierung des leeren Rußfilters abgedeckt wird. Hierbei werden auch Abgastemperatur und Umgebungsdruck variiert, um deren Einfluss auf den Abgasmassenstrom beziehungsweise Druckabfall über dem Rußfilter mit zu berücksichtigen. Ein bei einer bestimmten Abgastemperatur und einem bestimmten Umgebungsdruck gemessener Druckabfall kann auf Basis der bekannten thermodynamischen Zusammenhänge zudem rechnerisch an andere Abgastemperaturen und/oder Umgebungsdrücke angepasst werden. Für jeden ersten Abgasmassenstrom wird ein dabei auftretender zugehöriger erster Druckabfall $y_{leer}$ unter Verwendung von zumindest einem geeigneten Sensor gemessen. Erfindungsgemäß wird hierfür ein Differenzdrucksensor verwendet, der den Druckabfall zwischen Einlass und Auslass des Rußfilters misst. Alternativ können zwei Drucksensoren verwendet werden, wobei ein erster Drucksensor am Eingang, beziehungsweise Einlass, des Rußfilters angeordnet ist und ein zweiter Drucksensor an dessen Ausgang, beziehungsweise Auslass. Durch diese Art der Druckmessung ist eine Verbesserung der Messgenauigkeit gegenüber einer Messung mit einem Differenzdrucksensor zwischen Einlass und Auslass des Rußfilters zu erzielen.

Mit den bei der Messung des Differenzdrucks über dem Rußfilter, beziehungsweise der Differenz des Abgasdrucks zwischen Eingang und Ausgang des Rußfilters, erhaltenen Werten für die ersten Druckabfälle $y_{leer}$ wird dann eine hinsichtlich Abgastemperatur und Umgebungsdruck normierte Kennlinie des Rußfilters ohne Beladung bestimmt und zur Verwendung in den nachfolgenden Verfahrensschritten bereitgestellt. Eine eventuell im weiteren Verfahrensverlauf erforderliche Anpassung eines in der Kennlinie angegebenen ersten Druckabfallwertes $y_{leer}$ an einen im Fahrbetrieb bei der Beladung gemessenen zweiten Druckabfallwert $y_{mess}$ in Bezug auf Abgastemperatur und Umgebungsdruck erfolgt rechnerisch auf Basis der bekannten thermodynamischen Zusammenhänge.

Ausgehend von dieser Kennlinie erfolgt in den weiteren Verfahrensschritten eine Bestimmung der aktuellen Beladung des Rußfilters unter Berücksichtigung der jeweils aktuellen Messwerte für den Druckabfall über dem Rußfilter $y_{mess}$, die Abgastemperatur und den Umgebungsdruck. Im Folgenden wird angenommen, dass jeder gemessene Druckabfall zur Verwendung bei der erfindungsgemäßen Beladungsbestimmung hinsichtlich Abgastemperatur und Umgebungsdruck korrigiert wird.

In einem zweiten Verfahrensschritt wird ein zweiter Abgasmassenstrom des Verbrennungsmotors, der durch das Rußfilter mit Beladung geleitet wird, bestimmt und ein dabei auftretender zweiter Druckabfall $y_{mess}$ in der vorgenannten Weise, unter Berücksichtigung der dabei gemessenen Abgastemperatur und dem dabei gemessenen Umgebungsdruck, ermittelt. Der in diesem Verfahrensschritt für den zweiten Abgasmassenstrom erhaltene Wert, beziehungsweise das dabei erhaltene Wertepaar, charakterisiert somit im Wesentlichen einen aktuellen Strömungswiderstand des Rußfilters. Erfindungsgemäß wird auch dieser zweite Druckabfall $y_{mess}$ Mittels eines Differenzdrucksensors gemessen.

In einem dritten Verfahrensschritt wird dann aus der für das leere Rußfilter im ersten Verfahrensschritt ermittelten Kennlinie der erste Druckabfall $y_{leer}$ ausgewählt, für den der erste und zweite Abgasmassenstrom denselben Wert aufweisen. Durch die Korrektur auf Normwerte müssen die Messungen im Fahrbetrieb und für die Ermittlung der Kennlinie nicht bei gleicher Abgastemperatur und gleichem Umgebungsdruck erfolgen, um vergleichbar zu sein. Da eine solche Korrektur anhand der bekannten thermodynamischen Zusammenhänge in allen Fällen vorgenommen wird, in denen die gemessenen Werte für Abgastemperatur und Umgebungsdruck bei der Messung des ersten Druckabfalls $y_{leer}$ von den gemessenen Werten für Abgastemperatur und Umgebungsdruck bei der Messung des zweiten Druckabfalls $y_{mess}$ abweichen, ist sichergestellt, dass der erste Druckabfall $y_{leer}$ und der zweite Druckabfall $y_{mess}$ bei demselben Abgasmassenstrom und für dieselben Werte von Abgastemperatur und Umgebungsdruck bestimmt werden, sodass aus einer Abweichung des aktuellen zweiten Druckabfalls $y_{mess}$ von dem bei dem leeren Filter ermittelten ersten Druckabfall $y_{leer}$ auf eine zwischenzeitlich erfolgte Beladungsänderung des Rußfilters geschlossen werden kann. Eine auf diese Weise ermittelte Beladungsänderung des Rußfilters entspricht somit im Ergebnis einer solchen, die mit einem unter gleichen Umweltbedingungen gemessenen ersten und zweiten Druckabfall $y_{leer}$, $y_{mess}$ bestimmt worden ist.

Der dritte Verfahrensschritt ist erforderlich, da der Druckabfall über dem Rußfilter nicht nur von der Beladung, sondern auch von dem jeweils wirkenden Abgasmassenstrom durch das Filter abhängt, was sich unmittelbar aus der oben wiedergegebenen Formel für den Abgasmassenstrom erschließt. Infolge dieser Abhängigkeiten des Druckabfalls über dem Rußfilter muss entweder der aus der Kennlinie für das leere Rußfilter zu entnehmende erste Druckabfall $y_{leer}$ oder der bei der Beladung des Rußfilters im Fahrbetrieb gemessene zweite Druckabfall $y_{mess}$ hinsichtlich Abgastemperatur und/oder Umgebungsdruck korrigiert werden, um aus einer Differenz zwischen zweitem Druckabfall $y_{mess}$ und erstem Druckabfall $y_{leer}$ zuverlässig die Beladung des Rußfilters mit Rußpartikeln bestimmen zu können.

Die beiden nunmehr vorliegenden Werte für den ersten Druckabfall $y_{leer}$ und den zweiten Druckabfall $y_{mess}$ dienen in einem anschließenden vierten Verfahrensschritt als Parameter für das verwendete Referenzmodell und charakterisieren als solche das gemessene Eingangs-Ausgangsverhalten des Rußpartikelfilters. Die Bestimmung der Beladung eines Rußfilters mit Rußpartikeln aus einem Abgasmassenstrom eines Verbrennungsmotors in einem Kraftfahrzeug erfolgt erfindungsgemäß mit einer Echtzeit-Parameterschätzung nach dem Prozessmodell

$$y_{schätz}(\theta) = y_{leer} \cdot \theta_1 + \theta_2 = y_{leer} \cdot k + d$$

mit $\theta$: Schätzparameter, $\theta_1 = k$: geschätzte Verstärkung infolge einer Beladung des Rußfilters, $\theta_2 = d$: geschätzte Sensorabweichung bei der Bestimmung des Druckabfalls über den Rußfilter.

Bei dem erfindungsgemäß verwendeten Prozessmodell wird somit ein im Fahrbetrieb bei einer Beladung des Rußfilters bestimmter zweiter Druckabfall $y_{mess}$ mit einem ersten Druckabfall $y_{leer}$, der mit demselben oder einem baugleichen Rußfilter ohne Rußpartikelbeladung bei gleichem Abgasmassenstrom mit einer Vormessung auf einem Prüfstand ermittelt worden ist und hinsichtlich der im Fahrbetrieb gemessenen Werte für Abgastemperatur und/oder Umgebungsdruck korrigiert wurde, verglichen und als Fehler eines Prozessparameters gegenüber einem entsprechenden Referenzparameter berücksichtigt.

Alternativ kann die Beladung auch nichtlinear über den Druckabfall $y_{leer}$ ermittelt werden, sollte dies notwendig erscheinen. Dies geschieht durch zusätzliche Parameter, zum Beispiel in der Form

$$y_{schätz}(\theta) = \sum_i f_i(y_{leer}, x) \cdot \theta_i + d.$$

Dabei stellen die Funktionen $f_i(y_{leer}, x)$ bekannte Nichtlinearitäten dar (zum Beispiel $y_{leer}^2, y_{leer}^3, \cdots$ ). Mit $x$ sind zusätzliche bestimmbare Größen gemeint, die für einen allgemeinen Fall Bedeutung finden könnten. Die Beladung ergibt sich aus den Werten $\theta_i$. Im Folgenden wird, wie vorstehend angegeben, ein einziger Faktor angenommen und auf diese Erweiterung nicht mehr eingegangen.

Allgemein dargestellt lautet das Prozessmodell somit:

$$\Delta p_{mess} = Faktor \cdot \Delta p_{leer} + Sensoroffset$$

mit $\Delta p_{mess} = p_{2,ein} - p_{2,aus}$: Differenzdruck über dem Rußfilter bei Beladung beziehungsweise Differenz des Abgasdrucks zwischen Eingang und Ausgang des Rußfilters bei Beladung, $\Delta p_{leer} = p_{1,ein} - p_{1,aus}$: Differenzdruck über dem Rußfilter ohne Beladung beziehungsweise Differenz des Abgasdrucks zwischen Eingang und Ausgang des Rußfilters ohne Beladung. Die Differenzdrücke gelten als normiert, das heißt auf gleiche Umgebungsbedingungen umgerechnet. Der Faktor steht dabei für eine beladungsbedingte Verstärkung. Mit dem Sensoroffset wird ein systematischer Fehler berücksichtigt, der insbesondere durch die verwendete Messvorrichtung bei der Druckmessung begründet ist.

Demgegenüber basiert die Beladungserkennung nach dem Stand der Technik einzig auf dem Zusammenhang Druckdifferenz/Volumenstrom, für den als Prozessmodell das quadratische Polynom $\Delta p_{gemessen} = A \cdot \dot{V}^2 + B \cdot \dot{V} + C$ mit $\dot{V}$: Abgasvolumenstrom, zum Ansatz kommt. Das erfindungsgemäße Verfahren ist also nicht auf ein Referenzmodell Druckdifferenz/Volumenstrom beschränkt, sondern erlaubt auch die Verwendung anderer Referenzmodelle, wie beispielsweise das Verhältnis Abgasdruck vor dem Filter zu Abgasdruck nach dem Filter $p_{1,vor}/p_{1,nach}$, für das in diesem Fall im ersten Verfahrensschritt die Kennlinie ermittelt wird, aus der die in den nachfolgenden Verfahrensschritten heranzuziehenden Referenzparameter $y_{leer}$ zu entnehmen sind.

Für die Berechnung der Parameter des Prozessmodells wird zunächst ein Fehler e zwischen dem bei dem Rußfilter mit Beladung gemessenen zweiten Druckabfall $y_{mess}$ und dem zu bestimmenden Schätzwert $y_{schätz}$ berechnet:

$$e = y_{schätz}(\theta) - y_{mess} = (k \cdot y_{leer} + d) - y_{mess}$$

wobei $\theta_1 = k = 1$ für das Rußfilter ohne Beladung gilt.

Schließlich werden unter Verwendung des Fehlers e der erste Schätzparameter $\theta_1 = k$ und der zweite Schätzparameter $\theta_2 = d$ als Parameter des Prozessmodells mittels eines der bekannten Echtzeit-Parameterschätzverfahren berechnet. Bei der Berechnung der Parameter $\theta$ wird zum Beispiel in bekannter Weise der quadratische Fehler minimiert, wobei allgemein gilt: Je kleiner der Wert $J(\theta)$ wird, desto besser ist die Schätzung ( $J = \int_0^\infty e(t)^2 dt$ mit $e(t) = x_{Soll}(t) - x_{Ist}(t)$ ).

Neben der Methode der Summe der kleinsten Fehlerquadrate können verschiedene weitere Optimierungsfunktionen verwendet werden. Eine solche weitere Möglichkeit stellt beispielsweise auch die instantane Fehlerminimierung $J = e(t)^2$ dar. Darüber hinaus sind weitere Optimierungsfunktionen der Literatur zu entnehmen. Entsprechend der jeweils gewählten Optimierungsfunktion wird ein Parameterschätzer erhalten, der sich von den Parameterschätzern, die mit anderen Optimierungsfunktionen erhältlich sind, unterscheidet. Für die online-Fähigkeit einer Optimierungsfunktion ist es hilfreich, dass sie auf linearen Parametern beruht und mithin zur Berechnung lediglich eine geringe Rechenleistung erfordert. Numerische Optimierungen (zum Beispiel (konvexe) nichtlineare Optimierung) sind auch denkbar, jedoch unvorteilhaft bzgl. der notwendigen Rechenleistung. Diese Voraussetzung ist bei dem erfindungsgemäßen Prozessmodell in vorteilhafter Weise erfüllt.

Das zu minimierende Gütefunktional ist gegeben durch

$$J(\theta) = e^2/2.$$

Durch die Ableitung dieses Gütefunktionals nach den Parametern folgt daraus:

$$J(\theta) = [\frac{\delta J}{\delta \theta_1}, \frac{\delta J}{\delta \theta_2}]^T, \frac{\delta J}{\delta \theta_1} = -e \cdot y_{leer}, \frac{\delta J}{\delta \theta_2} = -e.$$

Die erfindungsgemäße Bestimmung der Beladung eines Rußfilters mit Rußpartikeln aus einem Abgasmassenstrom eines Verbrennungsmotors in einem Kraftfahrzeug ist damit unabhängig von der Art der jeweils für eine Charakterisierung des Beladungsverhaltens des Rußfilters verwendeten Messsignale und kann insbesondere unabhängig von einem Abgasvolumenstrom, oder Abgasmassenstrom, erfolgen. Ferner können beliebige weitere Einflussfaktoren für die Beladung des Rußfilters berücksichtigt werden, indem die Messwerte in einem vorausgehenden Rechenschritt entsprechend korrigiert werden. Das erfindungsgemäße Verfahren ermöglicht eine zuverlässige Bestimmung des aktuellen Beladungsgrades eines Rußfilters mit Rußpartikeln aus einem Abgasmassenstrom eines Verbrennungsmotors in einem Kraftfahrzeug ausgehend von beliebigen Referenzmodellparametern und entsprechenden Filter-Durchflusskurven beziehungsweise Kennlinien.

Weitere bevorzugte Ausgestaltungen der Erfindung ergeben sich aus den übrigen, in den Unteransprüchen genannten Merkmalen. Die verschiedenen, in dieser Anmeldung genannten Ausführungsformen sind, sofern im Einzelfall nicht anders ausgeführt, vorteilhaft kombinierbar.

Nach einer ersten besonders bevorzugten Durchführungsart des erfindungsgemäßen Verfahrens erfolgt die Beladungsbestimmung des Rußfilters durch Echtzeit-Parameterschätzung mittels des Gradientenverfahrens. Danach werden der erste Schätzparameter $\theta_1 = k$, beziehungsweise der erste Prozessparameter, und der zweite Schätzparameter $\theta_2 = d$, beziehungsweise der zweite Prozessparameter, unter Verwendung des Schätzfehlers e mittels Integration bestimmt nach

$$\dot{k} = \gamma_k \cdot e \cdot y_{mess}$$

und

$$\dot{d} = \gamma_d \cdot e$$

mit $\dot{k}$: Ableitung des ersten Schätzparameters nach der Zeit, d: Ableitung des zweiten Schätzparameters nach der Zeit, $\gamma_k$: Schätzgeschwindigkeit des ersten Schätzparameters und $\gamma_d$: Schätzgeschwindigkeit des zweiten Schätzparameters.

Mit dem Gradienten nach den Parametern $\nabla J(\theta)$ kann man nun in "absteigende Richtung" mit Geschwindigkeit $\Gamma$ laufen:

$$\dot{\theta} = -\Gamma \cdot \nabla J(\theta).$$

Im vorliegenden Fall bedeutet das

$$\dot{\theta} = -\Gamma \cdot e\emptyset \quad \text{mit} \quad \theta = [\theta_1 + \theta_2]^T, \emptyset = [y_{mess}, 1]^T.$$

$\Gamma$ ist die "adaptive Verstärkung" und ist die Schätzgeschwindigkeit, meist verwendet mit

$$\Gamma = \begin{bmatrix} \gamma_1 & 0 \\ 0 & \gamma_2 \end{bmatrix}.$$

Im Zeitdiskreten sind hier Erweiterungen möglich, zum Beispiel: $e_{neu} = \frac{e}{\alpha \phi^T \phi}$ . Weitergehende Angaben zur Echtzeit-Parameterschätzung nach dem Gradientenverfahren sind aus P. A. Ioannou, B. Fidan: Adaptive Control Tutorial (Advances in Design and Control), Society for Industrial and Applied Mathematics, Philadelphia, 2006, zu entnehmen.

In einer zweiten besonders bevorzugten Durchführungsform des erfindungsgemäßen Verfahrens werden die Schätzgeschwindigkeiten des ersten und zweiten Schätzparameters $\gamma_k$, $\gamma_d$ bei der Echtzeit-Parameterschätzung entsprechend einer Messgenauigkeit der ersten und zweiten Abgasmassenströme und ersten und zweiten Druckabfälle $y_{leer}$, $y_{mess}$ variiert, wobei $\gamma_k = \gamma_d = 0$ bei geringer Messgenauigkeit, $\gamma_k$, $\gamma_d \gg 0$ bei hoher Messgenauigkeit bei der Bestimmung der Beladung des Rußfilters verwendet werden. Die Schätzgeschwindigkeit wird somit dann erhöht, wenn der Motorbetrieb geeignete Messwerte für eine Abgasschätzung liefert, während im umgekehrten Fall die Schätzgeschwindigkeit reduziert wird.

In einer weiteren bevorzugten Durchführungsform des erfindungsgemäßen Verfahrens werden der erste Schätzparameter $\theta_1 = k$ und der zweite Schätzparameter $\theta_2 = d$ mittels Echtzeit-Parameterschätzung nach der Methode der kleinsten Quadrate bestimmt. Hierbei wird die Summe der quadrierten Schätzfehler $e$ minimiert. Einzelheiten zur Echtzeit-Parameterschätzung nach dieser Methode sind aus P. A. Ioannou, B. Fidan: Adaptive Control Tutorial (Advances in Design and Control), Society for Industrial and Applied Mathematics, Philadelphia, 2006, zu entnehmen.

In einer erfindungsgemäßen Durchführungsform des Verfahrens werden die ersten und zweiten Druckabfälle $y_{leer}$, $y_{mess}$ mit einem Differenzdrucksensor gemessen. Durch die Verwendung eines Differenzdrucksensors bei der Beladungsbestimmung des Rußfilters kann die Zuverlässigkeit der mit dem erfindungsgemäßen Verfahren erhältlichen Schätzwerte gesteigert werden, da die von dem Differenzdrucksensor gelieferten Messwerte direkt als Überladungssicherung des Rußfilters dienen können. In der Motorsteuerung wird dazu eine Plausibilitätsprüfung zwischen der verfahrensgemäß erhaltenen Beladung des Rußfilters und den dabei mit dem Differenzdrucksensor gemessenen Daten vorgenommen. Insbesondere ist mit der Verwendung eines Differenzdrucksensors gegenüber einer alternativ möglichen Verwendung jeweils eines Drucksensors am Einlass und am Auslass des Rußfilters eine Kostenersparnis bei der Beladungsbestimmung zu erzielen.

Weiterhin ist es bevorzugt, die mit dem Differenzdrucksensor mit leerem und beladenem Rußfilter erhaltenen Messsignale für die ersten und zweiten Druckabfälle $y_{leer}$, $y_{mess}$ für die Weiterverarbeitung einer digitalen Filterung zur Rauschunterdrückung zu unterziehen. Insbesondere ist eine Filterung dieser Messdaten vorteilhaft, um eine Phasenanpassung zu den bei einer Beladung des Rußfilters erhaltenen Daten sicherzustellen. Bevorzugt wird für die Filterung von Messdaten für die Beladungsbestimmung eines Rußfilters ein kontinuierliches Frequenzfilter, auch Butterworth-Filter genannt, eingesetzt. Weiter eignen sich für diese Verwendung Digitalfilter, insbesondere Digitalfilter 4. Ordnung, und Mittelwertfilter.

Darüber hinaus ist es bevorzugt, die ersten und zweiten Abgasmassenströme mittels Ultraschallmessung zu bestimmen. Anders als bei der üblichen Berechnung der Abgasmassenströme durch das Rußfilter aus Kraftstoff- und Luftdurchsatz in der Motorsteuerung, stehen die mittels Ultraschallsensoren gemessenen Massenströme unmittelbar für eine Verwendung zur Beladungsbestimmung des Rußfilters bereit. Mit der Messung der bei der Beladung des Rußfilters wirkenden Abgasmassesströme mittels Ultraschallsensoren ist insoweit eine Steigerung der Zuverlässigkeit der mit dem erfindungsgemäßen Verfahren erhältlichen Schätzwerte möglich.

In einer ebenfalls bevorzugten Durchführungsform des erfindungsgemäßen Verfahrens werden die mit der Ultraschallmessung erhaltenen Messsignale für die ersten und zweiten Abgasmassenströme vor einer Weiterverarbeitung einer digitalen Filterung zur Rauschunterdrückung unterzogen. Es wird diesbezüglich auf die vorstehenden Angaben zur Filterung der verfahrensgemäß erhaltenen Messsignale für die ersten und zweiten Druckabfälle verwiesen, die für die Filterung der Ultraschallsignale in gleiche Weise zutreffen.

Gemäß einer letzten bevorzugten Durchführungsform des erfindungsgemäßen Verfahrens wird die Beladung des Rußfilters mit Rußpartikeln beim Betreiben des Verbrennungsmotors kontinuierlich bestimmt.

Alternativ erfolgt die Beladungsbestimmung des Rußfilters in vorgegebenen Zeitabständen, wobei die Schätzgenauigkeit mit der Stärke der auftretenden Abgasmassenströme zunimmt.

Nach einer weiteren Verfahrensalternative wird die Beladung des Rußfilters in Abhängigkeit von einer Situationserkennung bestimmt. Dabei werden aktuelle Zustandsdaten des Verbrennungsmotors erfasst und die gemessenen beziehungsweise ermittelten Werte für die Bestimmung der Beladung des Rußfilters mit Rußpartikeln beim Betreiben des Verbrennungsmotors bereitgestellt. Besonders geeignete Zustandsdaten zur Charakterisierung einer Betriebssituation des Verbrennungsmotors sind die aktuelle Motorlast, beziehungsweise der aktuelle Kraftstoffverbrauch, und die Betriebsdauer des Motors, beziehungsweise die zurückgelegte Fahrstrecke des Kraftfahrzeugs mit dem Verbrennungsmotor. Neben dem Kraftstoffverbrauch und/oder der Betriebsdauer des Motors, beziehungsweise der zurückgelegten Fahrstrecke des Kraftfahrzeugs, können für die Situationserkennung grundsätzlich auch alle anderen, für eine Rußbildung beim Betrieb des Verbrennungsmotors maßgeblichen Kenngrößen erfasst und für die Beladungsschätzung des Partikelfilters herangezogen werden. Durch eine gezielte Berücksichtigung verschiedener Betriebsarten des Verbrennungsmotors bei der Beladung des Rußfilters kann die Zuverlässigkeit der mit dem erfindungsgemäßen Verfahren erhältlichen Schätzwerte weiter gesteigert werden. Eine solche Situationserkennung wird durch ein entsprechendes Steuerprogramm in der Motorsteuerung ermöglicht.

Ein weiterer Aspekt der Erfindung betrifft eine Steuereinrichtung für einen Verbrennungsmotor mit einem Rußfilter in einem Kraftfahrzeug, die zur Bestimmung einer Beladung des Rußfilters mit Rußpartikeln aus einem Abgasmassenstrom des Verbrennungsmotors, insbesondere eines Ottomotors, nach einem erfindungsgemäßen Verfahren, wie vorstehend beschrieben, ausgebildet ist.

Ein weiterer Aspekt der Erfindung betrifft schließlich ein Computerprogrammprodukt, das Befehle umfasst, bei deren Ausführung durch einen Computer der Computer veranlasst wird, ein erfindungsgemäßes Verfahren wie vorstehend beschrieben durchzuführen. Noch ein weiterer Aspekt der Erfindung betrifft ein computerlesbares Speichermedium, umfassend ein Computerprogrammprodukt, das Befehle umfasst, bei deren Ausführung durch einen Computer der Computer veranlasst wird, ein erfindungsgemäßes Verfahren, wie vorstehend beschrieben durchzuführen. Das Speichermedium kann ein flüchtiger Speicher oder ein nicht-flüchtiger Speicher sein.

Die Erfindung wird nachfolgend in einem Ausführungsbeispiel anhand der zugehörigen Zeichnungen weitergehend erläutert. Es zeigen:

Figur 1    ein schematisches Ablaufdiagramm eines erfindungsgemäßen Verfahrens;

Figur 2    eine graphische Darstellung einer geschätzten Beladung des Rußfilters mit Rußpartikeln über der Zeit mit der zugehörigen gemessenen und geschätzten Verstärkung des Druckabfalls über dem Rußfilter.

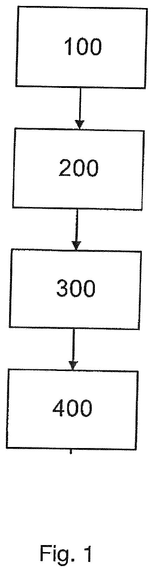

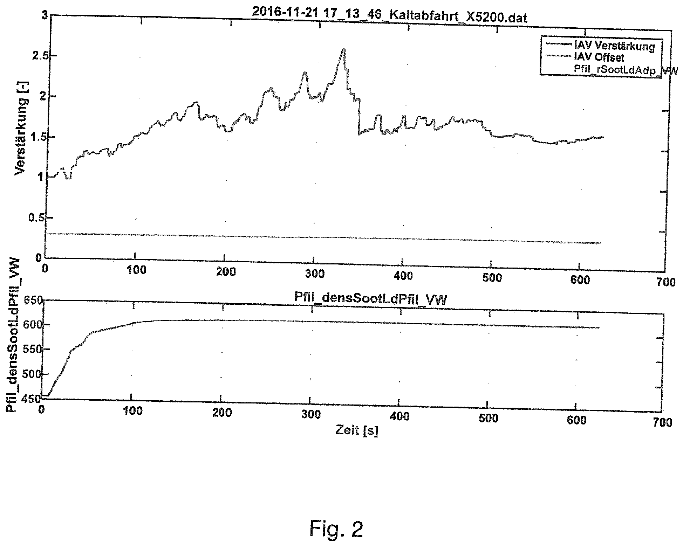

Figur 1 zeigt ein schematisches Ablaufdiagramm des erfindungsgemäßen Verfahrens. Die dargestellten Verfahrensschritte zur Bestimmung einer Beladung eines Rußfilters mit Rußpartikeln aus einem Abgasmassenstrom eines Verbrennungsmotors sollen im Folgenden unter Bezugnahme auf das in Figur 2 gezeigte verfahrensgemäße Schätzergebnis für die Beladung näher erläutert werden. In dem Beispiel nach Figur 2 erfolgt eine Beladungsbestimmung eines Rußfilters in einem Kraftfahrzeug mit einem Ottomotor im Fahrbetrieb nach einem Kaltstart des Motors über 120 Sekunden.

In einem ersten Verfahrensschritt 100 wird dazu ein fabrikneues Rußfilter gleicher Bauart auf einem Prüfstand mit einem Ottomotor verbunden, sodass der Abgasmassenstrom des Motors das Rußfilter entsprechend seiner Verwendung in dem Kraftfahrzeug durchströmen kann. Zudem wird zwischen Einlass und Auslass des Rußfilters ein Differenzdrucksensor montiert, um eine Druckdifferenz zwischen Filtereinlass und Filterauslass $y_{leer}$ zu messen. Sowohl das Rußfilter als auch der Differenzdrucksensor sind von derselben Art, wie sie im Kraftfahrzeug für den Fahrbetrieb verwendet werden.

Der Ottomotor wird dann mit stufenweise steigender Belastung und damit zunehmendem Abgasmassenstrom über jeweils einige Minuten solange betrieben, bis der gesamte Strömungsbereich, innerhalb dessen der Abgasmassenstrom durch das Rußfilter im realen Fahrbetrieb schwanken kann, abgedeckt ist.

Für jeden so durchlaufenen Betriebszustand des Motors werden innerhalb der Haltedauer der Druckabfall über den leeren Rußfilter, die Abgastemperatur und der Umgebungsdruck gemessen. Mit diesen Messwerten werden dann die zugehörigen Abgasmassenströme in der oben angegebenen Weise berechnet und in Form einer Kennlinie für das leere Rußfilter zur Verwendung in den nachfolgenden Verfahrensschritten bereitgestellt.

Für das baugleiche Rußfilter und und den baugleichen Differenzdrucksensor in dem Kraftfahrzeug mit Ottomotor wird dann in einem zweiten Schritt 200 im Fahrbetrieb entsprechend Figur 2 kontinuierlich jeweils der Differenzdruck $y_{mess}$ zwischen Filtereinlass und Filterauslass gemessen und erfasst, wobei wiederum gleichzeitig Abgastemperatur und Umgebungsdruck jeweils miterfasst werden. Alle Messungen erfolgen unter Verwendung eines Anti-Aliasing Filters (evtl. analog, zum Beispiel R-C-Glied) und eventuell eines Digital-Filters zur Rauschunterdrückung.

In einem dritten Schritt 300 wird aus der für das leere Rußfilter im ersten Verfahrensschritt ermittelten Kennlinie der erste Druckabfall $y_{leer}$ ausgewählt, der bei denselben Werten für Abgastemperatur und Umgebungsdruck gemessen wurde; im Falle einer Abweichung von Abgastemperatur und/oder Umgebungsdruck bei der Messung des ersten Druckabfalls $y_{leer}$ und des zweiten Druckabfalls $y_{mess}$ wird der erste Druckabfall $y_{leer}$ mit den im Fahrbetrieb gemessenen Werten für Abgastemperatur und/oder Umgebungsdruck rechnerisch korrigiert. Auf diese Weise wird sichergestellt, dass eine Abweichung der Abgasmassenströme durch das Rußfilter mit und ohne Beladung im Wesentlichen auf einer Beladung mit Rußpartikeln beruht.

In einem vierten Schritt 400 wird schließlich mit den beiden im dritten Verfahrensschritt bestimmten gefilterten Werten für den ersten und zweiten Druckabfall $y_{leer}$, $y_{mess}$ die aktuelle Beladung des Rußfilters mit konstanten Schätzgeschwindigkeiten $\gamma_k$, $\gamma_d$ berechnet. Ausgehend von der Vermutung, dass eine Beladung des Rußfilters mit Rußpartikeln einen um einen Verstärkungsfaktor $k$ höheren Messwert ergibt als bei einem entsprechenden leeren Filter und der durch den Sensoroffset d bedingten Verstärkung, werden die zu schätzenden Parameter $k$ und d mittels der erfindungsgemäßen Echtzeit-Parameterschätzung nach dem Gradientenverfahren wie oben angegeben berechnet.

Die so erhaltenen Messwerte für die Verstärkung 31 und den Sensoroffset 32 sowie die mittels Echtzeit-Parameterschätzung erhaltene Verstärkung 33 sind in Figur 2 oben jeweils über die gesamte Messdauer dargestellt. Figur 2 unten zeigt die nach dem erfindungsgemäßen Verfahren mithilfe der geschätzten Verstärkung 33 geschätzte Beladung des Rußfilters mit Rußpartikeln im Fahrbetrieb über die Messdauer.

**Bezugszeichenliste**

| 1 | Beladungsmessprotokoll |
|---|---|
| 2 | Beladung (Pfil densSootLd-Pfil_VW) |
| 21 | Beladung geschätzt |
| 3 | Verstärkung |
| 31 | Verstärkung gemessen (IAV Verstärkung) |
| 32 | Sensoroffset (IAV Offset) |
| 33 | Verstärkung geschätzt (Pfil_rSootLdAdp_VW) |
| 4 | Zeitachse |

| 100 | erster Verfahrensschritt |
|---|---|
| 200 | zweiter Verfahrensschritt |
| 300 | dritter Verfahrensschritt |
| 400 | vierter Verfahrensschritt |

**Patentansprüche**

**1.** Verfahren zur Bestimmung einer Beladung eines Rußfilters mit Rußpartikeln aus einem Abgasmassenstrom eines Verbrennungsmotors, insbesondere eines Ottomotors, in einem Kraftfahrzeug, mit den Schritten:

Ermitteln (100) einer Kennlinie für den Zusammenhang zwischen Abgasmassenstrom, Abgastemperatur, Umgebungsdruck und Druckabfall über das Rußfilter ohne Beladung, wobei eine Vielzahl von unterschiedlichen ersten Abgasmassenströmen eines Verbrennungsmotors durch ein Rußfilter ohne Beladung geleitet werden und für jeden ersten Abgasmassenstrom ein dabei auftretender erster Druckabfall ($y_{leer}$) mittels wenigstens eines Sensors unter gleichzeitiger Erfassung von Abgastemperatur und Umgebungsdruck gemessen wird, und wobei die ersten Druckabfälle hinsichtlich Abgastemperatur und Umgebungsdruck rechnerisch normiert in Form einer Kennlinie des Rußfilters ohne Beladung bereitgestellt werden, wobei der erste Druckabfall mittels eines Differenzdrucksensors gemessen wird;

Bestimmen (200) eines zweiten Abgasmassenstroms des Verbrennungsmotors, der durch das Rußfilter mit Beladung beim Betrieb des Verbrennungsmotors geleitet wird, und messen eines dabei auftretenden zweiten Druckabfalls ($y_{mess}$) mittels des wenigstens einen Sensors unter gleichzeitiger Erfassung von Abgastemperatur und Umgebungsdruck, wobei der zweite Druckabfall mittels eines Differenzdrucksensors gemessen wird;

Auswählen (300) eines ersten Druckabfalls ($y_{leer}$) aus der Kennlinie des Rußfilters ohne Beladung, für den der erste und zweite Abgasmassenstrom, die Abgastemperatur und der Umgebungsdruck dieselben Werte aufweisen;

Berechnen (400) eines Schätzwertes ($y_{schätz}$) für das beladene Rußfilter mittels einer Echtzeit-Parameterschätzung nach einem Referenzmodell

$$y_{schätz}(\theta) = y_{leer} \cdot \theta_1 + \theta_2 = y_{leer} \cdot k + d$$

mit $\theta$: Schätzparameter, $\theta_1 = k$: geschätzte Verstärkung infolge einer Beladung des Rußfilters, $\theta_2 = d$: geschätzte Abweichung des wenigstens einen Sensors bei der Bestimmung des Druckabfalls über den Rußfilter,

wobei in einem ersten Schritt ein Fehler ($e$) zwischen dem bei dem Rußfilter mit Beladung gemessenen zweiten Druckabfall ($y_{mess}$) und dem zu bestimmenden Schätzwert ($y_{schätz}$)

$$e = y_{schätz}(\theta) - y_{mess} = (k \cdot y_{leer} + d) - y_{mess}$$

mit $\theta_1 = k = 1$: für das Rußfilter ohne Beladung, berechnet wird, und wobei in einem zweiten Schritt der erste Schätzparameter ($\theta_1 = k$) und der zweite Schätzparameter ($\theta_2 = d$) mittels Echtzeit-Parameterschätzung bestimmt werden.

**2.** Verfahren nach Anspruch 1, wobei der erste Schätzparameter ($\theta_1 = k$) und der zweite Schätzparameter ($\theta_2 = d$) mittels Echtzeit-Parameterschätzung nach dem Gradientenverfahren bestimmt werden, wobei mit dem Schätzfehler ($e$) der erste und zweite Schätzparameter ($\theta_1 = k$, $\theta_2 = d$) mittels Integration bestimmt werden nach

$$\dot{k} = \gamma_k \cdot e \cdot y_{mess} \quad \text{und} \quad \dot{d} = \gamma_d \cdot e$$

mit $\dot{k}$: Ableitung des ersten Schätzparameters nach der Zeit, $\dot{d}$: Ableitung des zweiten Schätzparameters nach der Zeit, $\gamma_k$: Schätzgeschwindigkeit des ersten Schätzparameters und $\gamma_d$: Schätzgeschwindigkeit des zweiten Schätzparameters.

3. Verfahren nach Anspruch 2, wobei die Schätzgeschwindigkeiten des ersten und zweiten Schätzparameters ($\gamma_k$, $\gamma_d$) bei der Echtzeit-Parameterschätzung entsprechend einer Messgenauigkeit der ersten und zweiten Abgasmassenströme und ersten und zweiten Druckabfälle ($y_{leer}$, $y_{mess}$) variiert werden, wobei

$$\gamma_k = \gamma_d = 0$$

bei geringer Messgenauigkeit,

$$\gamma_k, \gamma_d \gg 0$$

bei hoher Messgenauigkeit bei der Bestimmung der Beladung des Rußfilters verwendet werden.

4. Verfahren nach Anspruch 1, wobei der erste Schätzparameter ($\theta_1 = k$) und der zweite Schätzparameter ($\theta_2 = d$) mittels Echtzeit-Parameterschätzung nach der Methode der kleinsten Quadrate bestimmt werden, wobei die Summe der quadrierten Schätzfehler ($e$) minimiert wird.

5. Verfahren nach einem der Ansprüche 1 bis 4, wobei die mit dem Differenzdrucksensor erhaltenen Messsignale für die ersten und zweiten Druckabfälle ($y_{leer}$, $y_{mess}$) vor einer Weiterverarbeitung einer digitalen Filterung zur Rauschunterdrückung, insbesondere unter Verwendung eines Butterworth-Filters, unterzogen werden.

6. Verfahren nach einem der vorangehenden Ansprüche, wobei die ersten und zweiten Abgasmassenströme mittels Ultraschallmessung bestimmt werden.

7. Verfahren nach Anspruch 6, wobei die mit der Ultraschallmessung erhaltenen Messsignale für die ersten und zweiten Abgasmassenströme vor einer Weiterverarbeitung einer digitalen Filterung zur Rauschunterdrückung unterzogen werden.

8. Verfahren nach einem der vorangehenden Ansprüche, wobei die Bestimmung der Beladung des Rußfilters mit Rußpartikeln beim Betreiben des Verbrennungsmotors kontinuierlich, in vorgegebenen Zeitabständen oder in Abhängigkeit von einer Situationserkennung, insbesondere eines Kraftstoffverbrauchs und/oder einer zurückgelegten Fahrstrecke, unter Bereitstellung der gemessenen und ermittelten Werte für eine weitere Verwendung erfolgt.

9. Steuereinrichtung für einen Verbrennungsmotor, insbesondere einen Ottomotor, mit einem Rußfilter, **dadurch gekennzeichnet, dass** diese zur Durchführung eines Verfahrens nach einem der Ansprüche 1 bis 8 ausgebildet ist.

10. Computerprogrammprodukt, **dadurch gekennzeichnet, dass** dieses ein Programm mit Instruktionen umfasst, die bei der Ausführung durch einen Computer diesen veranlassen, ein Verfahren nach einem der Ansprüche 1 bis 8 durchzuführen.

**Claims**

1. Method for determining the loading of a soot filter with soot particles from an exhaust gas mass flow of an internal combustion engine, in particular a gasoline engine, in a motor vehicle, comprising the steps of:

    determining (100) a characteristic curve for the relationship between the exhaust gas mass flow, the exhaust gas temperature, the ambient pressure and the pressure drop across the soot filter without loading, wherein a plurality of different first exhaust gas mass flows of an internal combustion engine are passed through a soot filter without loading and, for each first exhaust gas mass flow, a first pressure drop ($y_{leer}$) occurring in the

process is measured by means of at least one sensor with simultaneous detection of the exhaust gas temperature and ambient pressure, and wherein the first pressure drops are mathematically normalized with respect to the exhaust gas temperature and ambient pressure in the form of a characteristic curve of the soot filter without loading, wherein the first pressure drop is measured by means of a differential pressure sensor;

determining (200) a second exhaust gas mass flow of the internal combustion engine, which is passed through the soot filter with loading during operation of the internal combustion engine, and measuring a second pressure drop ($y_{mess}$) occurring in the process by means of the at least one sensor with simultaneous detection of the exhaust gas temperature and ambient pressure, wherein the second pressure drop is measured by means of a differential pressure sensor;

selecting (300) a first pressure drop ($y_{leer}$) from the characteristic curve of the soot filter without loading, for which the first and second exhaust gas mass flow, the exhaust gas temperature and the ambient pressure have the same values;

calculating (400) an estimation value ($y_{schätz}$) for the loaded soot filter by means of a real-time parameter estimation according to a reference model

$$y_{schätz}(\theta) = y_{leer} \cdot \theta_1 + \theta_2 = y_{leer} \cdot k + d$$

where $\theta$: estimation parameters, $\theta_1 = k$: estimated gain due to loading of the soot filter, $\theta_2 = d$: estimated deviation of the at least one sensor when determining the pressure drop across the soot filter,

wherein, in a first step, an error ($e$) between the second pressure drop ($y_{mess}$) measured in the soot filter with loading and the estimation value ($y_{schätz}$) to be determined

$$e = y_{schätz}(\theta) - y_{mess} = (k \cdot y_{leer} + d) - y_{mess}$$

where $\theta_1 = k = 1$: for the soot filter without loading is calculated, and wherein, in a second step, the first estimation parameter ($\theta_1 = k$) and the second estimation parameter ($\theta_2 = d$) are determined by means of real-time parameter estimation.

2. Method according to claim 1, wherein the first estimation parameter ($\theta_1 = k$) and the second estimation parameter ($\theta_2 = d$) are determined by means of real-time parameter estimation according to the gradient method, wherein, with the estimation error ($e$), the first and the second estimation parameter ($\theta_1 = k, \theta_2 = d$) are determined by means of integration according to

$$\dot{k} = \gamma_k \cdot e \cdot y_{mess} \text{ and } \dot{d} = \gamma_d \cdot e$$

where $\dot{k}$: derivation of the first estimation parameter according to time, $\dot{d}$: derivation of the second estimation parameter according to time, $\gamma_k$: estimation speed of the first estimation parameter and $\gamma_d$: estimation speed of the second estimation parameter.

3. Method according to claim 2, wherein the estimation speeds of the first and the second estimation parameter ($\gamma_k$, $\gamma_d$) in the real-time parameter estimation are varied according to a measurement accuracy of the first and second exhaust gas mass flows and first and second pressure drops ($y_{leer}, y_{mess}$), wherein

$$\gamma_k = \gamma_d = 0$$

is used in the case of low measurement accuracy,

$$\gamma_k, \gamma_d \gg 0$$

is used in the case of high measurement accuracy when determining the loading of the soot filter.

4. Method according to claim 1, wherein the first estimation parameter ($\theta_1 = k$) and the second estimation parameter ($\theta_2 = d$) are determined by means of real-time parameter estimation according to the method of least squares, wherein the sum of the squared estimation errors (*e*) is minimized.

5. Method according to any of claims 1 to 4, wherein the measurement signals obtained with the differential pressure sensor for the first and second pressure drops ($y_{leer}$, $y_{mess}$) are subjected to digital filtering for noise suppression, in particular using a Butterworth filter, before further processing.

6. Method according to any of the preceding claims, wherein the first and second exhaust gas mass flows are determined by means of ultrasound measurement.

7. Method according to claim 6, wherein the measurement signals obtained with the ultrasound measurement for the first and second exhaust gas mass flows are subjected to digital filtering for noise suppression before further processing.

8. Method according to any of the preceding claims, wherein the determination of the loading of the soot filter with soot particles during operation of the internal combustion engine takes place continuously, at predetermined time intervals, or depending on a situation detection, in particular a fuel consumption and/or a distance traveled, with provision of the measured and determined values for further use.

9. Control device for an internal combustion engine, in particular a gasoline engine, having a soot filter, **characterized in that** it is designed to carry out a method according to any of claims 1 to 8.

10. Computer program product, **characterized in that** it comprises a program with instructions which, when executed by a computer, cause the computer to carry out a method according to any of claims 1 to 8.

**Revendications**

1. Procédé de détermination d'une charge d'un filtre à suie avec des particules de suie provenant d'un débit massique de gaz d'échappement d'un moteur à combustion interne, en particulier d'un moteur à essence, dans un véhicule automobile, comprenant les étapes de :

évaluation (100) d'une courbe caractéristique pour la relation entre le débit massique de gaz d'échappement, la température de gaz d'échappement, la pression ambiante et la chute de pression à travers le filtre à suie sans charge, dans lequel une pluralité de premiers débits massiques de gaz d'échappement différents d'un moteur à combustion interne sont guidés à travers un filtre à suie sans charge et, pour chaque premier débit massique de gaz d'échappement, une première chute de pression ($y_{leer}$) se produisant alors est mesurée au moyen d'au moins un capteur avec détection simultanée de la température de gaz d'échappement et de la pression ambiante et dans lequel les premières chutes de pression sont fournies normalisées par calcul en ce qui concerne la température de gaz d'échappement et la pression ambiante sous la forme d'une courbe caractéristique du filtre à suie sans charge, dans lequel la première chute de pression est mesurée au moyen d'un capteur de pression différentielle ;
détermination (200) d'un second débit massique de gaz d'échappement du moteur à combustion interne, qui est guidé à travers le filtre à suie avec charge lors du fonctionnement du moteur à combustion interne et mesure d'une seconde chute de pression ($y_{mess}$) se produisant alors au moyen d'au moins un capteur avec détection simultanée de la température de gaz d'échappement et de la pression ambiante, dans lequel la seconde chute de pression est mesurée au moyen d'un capteur de pression différentielle ;
sélection (300) d'une première chute de pression ($y_{leer}$) à partir de la courbe caractéristique du filtre à suie sans charge, pour laquelle le premier et le second débit massique de gaz d'échappement, la température de gaz d'échappement et la pression ambiante présentent les mêmes valeurs ;
calcul (400) d'une valeur d'estimation ($y_{schätz}$) pour le filtre à suie chargé au moyen d'une estimation de paramètre en temps réel selon un modèle de référence

$$y_{schätz}(\theta) = y_{leer} \cdot \theta_1 + \theta_2 = y_{leer} \cdot k + d$$

avec $\theta$ : paramètre d'estimation, $\theta_1 = k$ : gain estimé à la suite d'une charge du filtre à suie, $\theta_2 = d$ : écart estimé de l'au moins un capteur lors de la détermination de la chute de pression à travers le filtre à suie,
dans lequel dans une première étape, une erreur (*e*) entre la seconde chute de pression ($y_{mess}$) mesurée au

niveau du filtre à suie avec charge et la valeur d'estimation ($y_{schätz}$) à déterminer

$$e = y_{schätz}(\theta) - y_{mess} = (k \cdot y_{leer} + d) - y_{mess}$$

avec $\theta_1 = k = 1$ : pour le filtre à suie dans charge, est calculée, et dans lequel dans une seconde étape, le premier paramètre d'estimation ($\theta_1 = k$) et le second paramètre d'estimation ($\theta_2 = d$) sont déterminés au moyen de l'estimation de paramètres en temps réel.

2. Procédé selon la revendication 1, dans lequel le premier paramètre d'estimation ($\theta_1 = k$) et le second paramètre d'estimation ($\theta_2 = d$) sont déterminés au moyen de l'estimation de paramètres en temps réel selon le procédé du gradient, dans lequel le premier et le second paramètre d'estimation ($\theta_1 = k$, $\theta_2 = d$) sont déterminés avec l'erreur d'estimation (e) au moyen d'une intégration selon

$$\dot{k} = \gamma_k \cdot e \cdot y_{mess} \text{ et } \dot{d} = \gamma_d \cdot e$$

avec $\dot{k}$: dérivation du premier paramètre d'estimation selon $\dot{d}$ actuelle : dérivation du second paramètre d'estimation selon $\gamma_k$ : vitesse d'estimation actuelle du premier paramètre d'estimation et $\gamma_d$ : vitesse d'estimation du second paramètre d'estimation.

3. Procédé selon la revendication 2, dans lequel les vitesses d'estimation des premier et second paramètres d'estimation ($\gamma_k$, $\gamma_d$) sont amenées à varier lors de l'estimation de paramètre en temps réel de manière correspondant à une précision de mesure des premier et second débits massiques de gaz d'échappement et des première et seconde chutes de pression ($y_{leer}$, $y_{mess}$), dans lequel sont utilisés

$$\gamma_k, \gamma_d = 0$$

avec une précision de mesure inférieure,

$$\gamma_k, \gamma_d \gg 0$$

avec une précision de mesure supérieure lors de la détermination de la charge du filtre à suie.

4. Procédé selon la revendication 1, dans lequel le premier paramètre d'estimation ($\theta_1 = k$) et le second paramètre d'estimation ($\theta_2 = d$) sont déterminés au moyen de l'estimation de paramètres en temps réel selon la méthode des moindres carrés, dans lequel la somme des erreurs d'estimation (e) élevées au carré est réduite au minimum.

5. Procédé selon l'une des revendications 1 à 4, dans lequel les signaux de mesure obtenus avec le capteur de pression différentielle pour les première et seconde chutes de pression ($y_{leer}$, $y_{mess}$) sont soumis, avant un traitement ultérieur, à un filtrage numérique pour la réduction du bruit, en particulier en utilisant un filtre de Butterworth.

6. Procédé selon l'une des revendications précédentes, dans lequel les premier et second débits massiques de gaz d'échappement sont déterminés au moyen d'une mesure par ultrasons.

7. Procédé selon la revendication 6, dans lequel les signaux de mesure obtenus avec la mesure par ultrasons pour les premier et second débits massiques de gaz d'échappement sont soumis, avant un traitement ultérieur, à un filtrage numérique pour la réduction du bruit.

8. Procédé selon l'une des revendications précédentes, dans lequel la détermination de la charge du filtre à suie avec des particules de suie lors du fonctionnement du moteur à combustion interne est effectuée de manière continue, à intervalles prédéfinis ou en fonction d'une reconnaissance de situation, en particulier d'une consommation de carburant et/ou d'une distance parcourue, en fournissant les valeurs mesurées et déterminées pour une utilisation ultérieure.

9. Dispositif de commande pour un moteur à combustion interne, en particulier un moteur à essence, comportant un filtre à suie,
**caractérisé en ce que** celui-ci est conçu pour la réalisation d'un procédé selon l'une des revendications 1 à 8.

10. Produit programme informatique, **caractérisé en ce que** celui-ci comprend un programme comportant des instructions qui, lorsqu'elles sont exécutées par un ordinateur, amènent ce dernier à réaliser un procédé selon l'une des revendications 1 à 8.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933988 A1
- DE 102014201589 B3
- EP 1854971 A1
- EP 2261474 A1
- FR 2965013 A1
- US 2005016137 A1
- WO 9206284 A1
- WO 2008079299 A2

**In der Beschreibung aufgeführte Nicht-Patentliteratur**

- Adaptive Control Tutorial (Advances in Design and Control). **P. A. IOANNOU ; B. FIDAN.** Society for Industrial and Applied Mathematics. 2006
- Adaptive Control Tutorial (Advances in Design and Control). **P. A. LOANNOU ; B. FIDAN.** Society for Industrial and Applied Mathematics. 2006